# FASCICULE DE BREVET EUROPEEN

(11) **EP 2 357 133 B1**
(45) Date de publication et mention de la délivrance du brevet: **24.07.2013**
(21) Numéro de dépôt: 11305161.9
(22) Date de dépôt: 16.02.2011
(51) Int. Cl.: B64D 13/06, H02M 7/219

(54) **Appareil de ventilation pour aéronef**
Lüftungsgerät für Flugzeuge
Air ventilation device for aircraft

(30) Priorité: 17.02.2010 FR 1051124
(43) Date de publication de la demande: 17.08.2011
(73) Titulaire: TECHNOFAN, 31700 Blagnac (FR); Airbus Operations, 31060 Toulouse (FR)
(72) Inventeur: Darnis, Olivier, 31150, Bruguières (FR); Foch, Etienne, 31000 Toulouse (FR); Lando, Jean-Louis, 09700 Saverdun (FR)
(74) Mandataire: Jacobson, Claude

(56) Documents cités:
- EP-A2- 1 746 260
- DE-C1- 10 119 433
- JP-A- 2009 284 747
- US-A- 5 383 335

## Description

La présente invention concerne un appareil de ventilation pour aéronef, du type comprenant :
- un ventilateur comprenant une machine électrique tournante et une roue de mise en mouvement d'un flux d'air, solidaire de la machine tournante pour sa mise en rotation ; et
- un onduleur auquel est reliée la machine tournante et qui, dans un mode d'alimentation moteur de l'appareil de ventilation, est propre à la mise en forme du courant d'alimentation de la machine tournante, lequel onduleur est propre à être relié à un réseau d'alimentation électrique.

On connaît des appareils de ventilation équipant divers types d'aéronefs, et particulièrement des avions, servant au refroidissement, lorsque l'aéronef est au sol, d'un échangeur de chaleur situé au niveau d'une entrée d'air dynamique. L'échangeur de chaleur est généralement un condenseur d'un cycle frigorifique de l'aéronef. DE 1 011 9433 montre un de ces appareil.

Lorsque l'aéronef est en vol, l'échangeur de chaleur est refroidi par l'air dynamique créé par le déplacement de l'avion. En effet, l'avion étant en mouvement dans une masse d'air sensiblement immobile, celle-ci se trouve par conséquent être en mouvement dans le référentiel de l'avion ; on appelle donc cet air, en mouvement dans le référentiel de l'avion mais sensiblement immobile dans le référentiel terrestre, « air dynamique ».

En revanche, lorsque l'aéronef est au sol, la convection naturelle n'est pas suffisante pour refroidir l'échangeur de chaleur de façon satisfaisante. En l'absence de dispositif complémentaire, les cycles frigorifiques de l'aéronef ne pourraient plus remplir leur rôle.

Les aéronefs sont donc équipés d'appareils de ventilation qui prélèvent de l'air à l'extérieur de l'aéronef et assurent un débit d'air suffisant au niveau de l'échangeur de chaleur pour le refroidir. Ce refroidissement est assuré au moyen d'une convection mécanique forcée.

Cependant, les systèmes actuels ne donnent pas entière satisfaction. Si en effet les appareils de ventilation actuels remplissent bien leur fonction lorsque l'aéronef est au sol, ceux-ci sont en revanche inutiles lorsque l'aéronef est en vol.

Il serait donc souhaitable de trouver une utilité à ces appareils de ventilation lorsque l'appareil est vol.

A cet effet, l'invention a pour objet un appareil de ventilation du type précité, l'onduleur étant réversible et étant, dans un mode générateur d'énergie de l'appareil de ventilation, propre à convertir l'énergie électrique fournie par la machine tournante lorsque celle-ci est entraînée mécaniquement par la roue et à injecter cette énergie électrique convertie dans le réseau d'alimentation électrique, caractérisé en ce que l'appareil de ventilation comporte un contrôleur et un distributeur s'étendant transversalement devant la roue, le distributeur comportant des aubes s'étendant radialement, le contrôleur étant propre, en mode alimentation moteur, à commander l'orientation des aubes dans une première position, maximisant un débit d'air généré par la roue lorsque celle-ci est entraînée par la machine tournante, et, en mode générateur d'énergie, à commander l'orientation des aubes dans une deuxième position, maximisant l'énergie électrique fournie par la machine tournante lorsque celle-ci est entraînée par la roue, elle-même entraînée par un flux d'air traversant le distributeur, les première et deuxième positions étant distinctes l'une de l'autre.

L'appareil de ventilation selon l'invention peut comprendre l'une ou plusieurs des caractéristiques suivantes, prise(s) isolément ou selon toute(s) combinaison(s) techniquement possible(s) :
- l'appareil de ventilation comporte un filtre passe-bas intercalé entre l'onduleur et le réseau électrique pour le filtrage du courant issu de l'onduleur ;
- le courant en sortie de l'appareil de ventilation en mode générateur d'énergie est un courant continu de tension comprise entre 500 et 600 volts, de préférence comprise entre 520 et 560 volts ;
- le sens de rotation de la roue est identique lorsque le courant est consommé par le ventilateur et lorsque le courant est produit par le ventilateur ;
- l'onduleur comporte trois branches montées en parallèle, chaque branche comportant deux interrupteurs montés en série, commandés par un contrôleur et entre lesquels est formé un point d'alimentation de la machine électrique, chaque interrupteur comportant un transistor et une diode montés en antiparallèle ;
- en mode générateur d'énergie, l'ensemble des interrupteurs de l'onduleur forme un pont redresseur commandé par le contrôleur ;
- les transistors sont des transistors bipolaires à grille isolée ;
- la machine tournante est une machine synchrone ;
- le rotor de la machine tournante comporte des aimants permanents ;
- la roue comporte un moyeu de révolution portant un ensemble de pales, et la machine tournante comprend un rotor et un stator, le stator présentant un carter avec une paroi latérale portant un ensemble d'ailettes, le design aérodynamique de l'ensemble de pales et de l'ensemble d'ailettes étant conçu pour que, en mode générateur d'énergie, le rendement de l'appareil de ventilation est supérieur à 0,3, de préférence supérieur à 0,35 ;
- le distributeur est conçu pour que, en mode générateur d'énergie et lorsque les aubes sont orientées de façon à maximiser l'énergie électrique générée par le ventilateur, le rendement de l'appareil de ventilation est supérieur à 0,4, de préférence supérieur à 0,45.

La présente invention sera mieux comprise à la lecture de la description qui va suivre, donnée uniquement à titre d'exemple, et faite en se référant aux dessins annexés, sur lesquels :
- la Figure 1 est une vue schématique en coupe selon un plan longitudinal d'un conduit d'air alimentant un échangeur de chaleur et équipé d'un appareil de ventilation selon l'invention ;
- la Figure 2 est une vue en coupe selon un plan longitudinal d'un appareil de ventilation selon l'invention ;
- la Figure 3 est un schéma simplifié de la structure électronique d'un appareil de ventilation selon l'invention.

Dans tout ce qui suit, on désigne par « au sol » le fait qu'un aéronef ne vole pas, ou qu'il vole à basse altitude, communément en-dessous de 10000 pieds. On désigne par « en vol » le fait qu'un aéronef vole à haute altitude, communément au-dessus de 10000 pieds.

De plus, le terme « cylindre » est à entendre au sens large et inclut aussi bien des éléments à base circulaire que des éléments à bases ovoïde, triangulaire, quadrangulaire ou tout autre type de contour fermé. Le terme « cylindrique de révolution » désigne des cylindres à base circulaire.

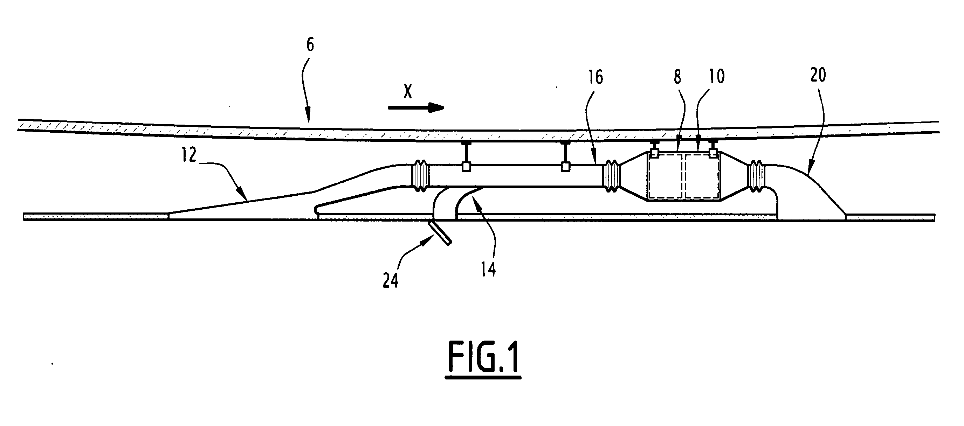

La Figure 1 représente un conduit d'air 6 d'un aéronef, comportant successivement un échangeur de chaleur 8 et un appareil de ventilation selon l'invention 10.

Le conduit d'air 6 s'étend dans une direction longitudinale X allant de l'avant vers l'arrière de l'aéronef. Il comporte successivement de l'avant vers l'arrière une entrée d'air dynamique 12, une portion cylindrique 16 et une sortie d'air 20. Il comporte en outre une entrée d'air ventilateur 14, piquée dans la portion cylindrique 16, en amont de l'échangeur de chaleur 8 et de l'appareil de ventilation 10.

L'entrée d'air dynamique 12, l'entrée d'air ventilateur 14 et la sortie d'air 20 débouchent toutes les trois sur l'extérieur de l'aéronef.

L'entrée d'air ventilateur 14 comporte un clapet 24.

La portion cylindrique 16 s'étend longitudinalement. Elle contient l'échangeur de chaleur 8 et porte l'appareil de ventilation 10. Elle est cylindrique de révolution au niveau de l'appareil de ventilation 10. L'échangeur de chaleur 8 est de préférence devant l'appareil de ventilation 10.

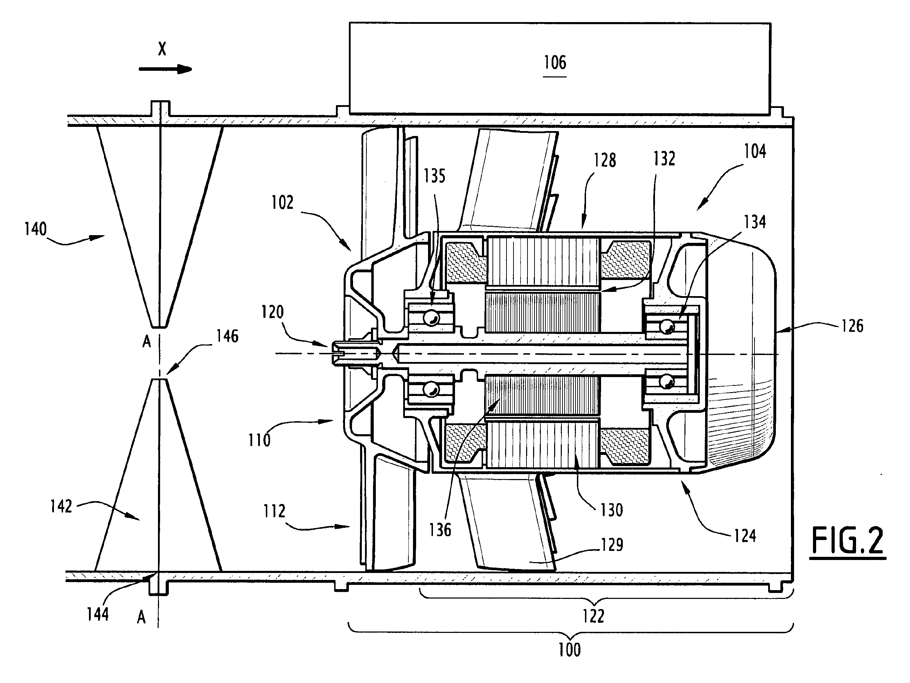

La Figure 2 présente une vue détaillée de l'appareil de ventilation 10 à l'intérieur de la partie cylindrique 16. Il comporte un ventilateur 100 et une partie électronique de puissance 106 pour son alimentation. Le ventilateur 100 est à l'intérieur de la portion cylindrique 16. Il est constitué d'une roue 102 et d'une machine électrique tournante triphasée 104.

La roue 102 comporte un moyeu 110 de révolution. Le moyeu 110 porte un ensemble de pales 112 dont l'extrémité libre suit sensiblement le profil de la surface intérieure de la partie cylindrique 16.

La roue 102 est par exemple une hélice.

La machine tournante 104 comporte un rotor 120 et un stator 122. Le rotor 120 est de forme générale cylindrique. Le stator 122 s'étend autour du rotor 120. De préférence, la machine tournante 104 est une machine synchrone.

Le stator 122 présente un carter 124. Le carter 124 comporte une embase 126 et une paroi latérale cylindrique 128. L'embase 126 est prolongée axialement vers l'avant par la paroi latérale cylindrique 128. La paroi latérale cylindrique 128 forme la surface extérieure de la machine tournante 104. Un ensemble d'ailettes 129 est fixé sur la surface latérale de la paroi latérale cylindrique 128.

Le carter 124 abrite une partie active 130 du stator 122. La partie active 130 est fixée sur la surface latérale intérieure de la paroi latérale cylindrique 128. Elle comporte des armatures formées de matériaux ferromagnétiques et des bobinages enroulés autour de ces armatures. La partie active 130 s'étend autour d'un entrefer 132.

Le rotor 120 s'étend longitudinalement au centre de l'entrefer 132. Il est monté rotatif par rapport au stator 122 par l'intermédiaire de moyens rotatifs 134, 135 fixés au carter 124. Ces moyens rotatifs 134, 135 sont par exemple des roulements à billes.

Le rotor 120 porte sur sa surface externe un ensemble d'éléments magnétiques 136, tels que des barres de matériau aimanté.

Le rotor 120 est solidaire de la roue 102. La roue 102 est vissée sur le rotor 120.

De préférence, l'appareil de ventilation 10 comporte également un distributeur 140. Ce distributeur 140 est placé devant la roue 102. Il s'étend transversalement. Il a un plan médian orienté perpendiculairement à l'axe longitudinal X.

Le distributeur 140 comporte des aubes 142 s'étendant radialement. Chaque aube 142 a une extrémité fixe 144 raccordée à la surface intérieure de la partie cylindrique 16, et une extrémité libre 146 proche de l'axe central de la partie cylindrique 16. Chaque aube 142 est apte à pivoter autour d'un axe A-A reliant son extrémité fixe 144 à son extrémité libre 146 entre une pluralité d'orientations. Un moteur (non représenté) commande la rotation de chaque aube 142 autour de son axe A-A. Les aubes 142 sont propres à être verrouillées dans une orientation précise, de sorte qu'ils ne peuvent alors plus pivoter autour de leurs axes A-A tant qu'ils n'ont pas été déverrouillés.

Le distributeur 140 permet d'optimiser le rendement de l'appareil de ventilation 10.

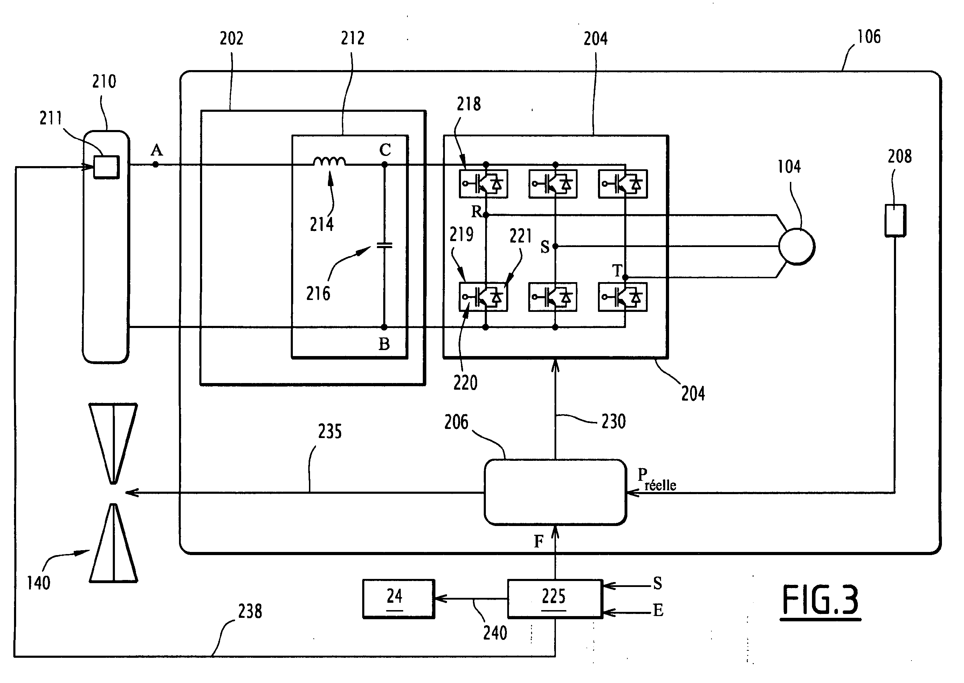

La Figure 3 présente un schéma de la partie électronique de puissance 106. Elle comporte un étage d'entrée 202, un onduleur 204, un contrôleur 206 et un capteur de position 208 du rotor 120 par rapport au stator 122, tel qu'un capteur à effet Hall. Elle est reliée à la machine tournante 104.

L'appareil de ventilation 10 est raccordé à un réseau d'alimentation électrique 210 haute tension de courant continu HVDC par l'intermédiaire de la partie électronique de puissance 106. Ce réseau d'alimentation électrique 210 est celui de l'aéronef. La différence de tension entre les bornes du réseau électrique 210 auxquelles est relié l'appareil de ventilation 10 est par exemple de 540 volts.

Le réseau d'alimentation électrique 210 comprend un interrupteur général 211. Cet interrupteur général 211 est apte à commuter entre une position fermée, dans laquelle il assure une connexion entre l'appareil de ventilation 10 et le réseau d'alimentation électrique 210, et une position ouverte, dans laquelle il n'assure pas de connexion entre l'appareil de ventilation 10 et le réseau d'alimentation électrique 210.

La partie électronique de puissance 106 est raccordée au réseau d'alimentation électrique 210 par l'intermédiaire de l'étage d'entrée 202. L'étage d'entrée 202 comporte un filtre 212 passe-bas réversible, et deux bornes A et B raccordées au réseau d'alimentation électrique 210.

Le filtre 212, relié entre les bornes A et B, comporte une bobine 214 reliée en série en un point C avec un condensateur 216. La sortie d'alimentation de l'onduleur 204 est constituée des points B et C.

L'onduleur 204 est réversible. Il comporte trois branches de commutation correspondant aux trois phases du moteur. Ces trois branches sont montées en parallèle entre les points d'entrée C et B. Chaque branche comporte deux interrupteurs 218,219 montés en série et entre lesquels est formé un point R,S,T d'alimentation triphasée de la machine tournante 104. Chaque interrupteur comporte un transistor 220 et une diode 221 montés en antiparallèle.

Le transistor 220 est apte à commuter entre une position ouverte et une position fermée. En position fermée, le transistor 220 de chaque interrupteur 218, 219 est apte à laisser passer un courant respectivement de la borne C vers l'une R des bornes R, S, T, ou de l'une R des bornes R, S, T vers la borne B. En position ouverte, le transistor 220 ne laisse passer aucun courant.

Le transistor 220 est par exemple un transistor bipolaire à grille isolée, connu sous l'acronyme IGBT.

La diode 221 de chaque interrupteur 218, 219 est propre à laisser passer un courant respectivement de la borne B vers l'une R des bornes R, S, T, ou de l'une R des bornes R, S, T vers la borne C. Lorsque les transistors 220 sont tous ouverts, les diodes 221 forment un pont redresseur.

Le capteur de position 208 est propre à fournir une position P_{réelle} du rotor 120 par rapport au stator 122.

Le contrôleur 206 comporte des moyens de réception d'informations concernant la position P_{réelle} du rotor 120. Il comporte également des moyens de réception d'une consigne F de fonctionnement provenant d'une unité de contrôle 225 de l'aéronef. Il est propre à en déduire des lois de commande 230 et 235 respectivement des interrupteurs 218,219 et des moteurs des aubes 142 du diffuseur 140.

L'unité de contrôle 225 comporte des moyens de réception d'une information S sur la situation en vol ou au sol de l'aéronef et des moyens de réception d'un ordre E de réinjection d'énergie électrique dans le réseau électrique 210 de l'aéronef. Elle est propre à en déduire la consigne F, ainsi que des lois de commande 238, 240 respectivement de l'interrupteur général 211 et du clapet 24.

Selon les entrées S, E que reçoit l'unité de contrôle 225, ses sorties 238, 240 et F varient. Le tableau ci-dessous donne les valeurs des sorties 238, 240, F en fonction des entrées S, E :

| Entrées | Sorties |
|---|---|
| S = "au sol" | 238 = fermé |
| | 240 = ouvert |
| | F = alimentation moteur |
| S = "en vol" | 238 = ouvert |
| E = 0 | 240 = fermé |
| | F = moulinet |
| S = "en vol" | 238 = fermé |
| E = 1 | 240 = fermé |
| | F = générateur d'énergie |

Ainsi, dans un premier mode de fonctionnement de l'aéronef, l'aéronef est au sol. L'interrupteur général 211 est alors fermé, le clapet 24 ouvert et l'appareil de ventilation 10 dans un mode d'alimentation moteur.

Dans un deuxième mode de fonctionnement de l'aéronef, l'aéronef est en vol et n'a pas de besoins spécifiques en énergie électrique. L'interrupteur général 211 est alors ouvert, le clapet 24 fermé et l'appareil de ventilation 10 dans un mode moulinet.

Dans un troisième mode de fonctionnement de l'aéronef, l'aéronef est en vol et a un besoin spécifique en énergie électrique. L'interrupteur général 211 est alors fermé, le clapet 24 fermé et l'appareil de ventilation 10 dans un mode générateur d'énergie.

Selon la consigne F reçue par le contrôleur 206, ses sorties 230, 235 varient. Le tableau ci-dessous donne les valeurs des sorties 230, 235 en fonction de la consigne F :

| Consigne F | Sorties |
|---|---|
| « alimentation moteur » | 230 = commande par modulation de largeur d'impulsion |
| | 235 = première position |
| « moulinet » | 230 = ouvert |
| | 235 = / |
| « générateur d'énergie » | 230 = commande en commutation |
| | 235 = deuxième position |

En mode alimentation moteur, la loi de commande 230 envoyée aux interrupteurs 218, 219 de l'onduleur 204 est de type à découpage à une fréquence élevée ; l'onduleur 204 est ainsi apte à convertir le courant continu fourni par l'étage d'entrée 202 en courant triphasé transmis à la partie active 130 du stator 122 de la machine tournante 104. Les aubes 142 du distributeur 140 sont orientées dans une première position qui maximise un débit d'air généré par la roue 102, lorsque celle-ci est entraînée par la machine tournante 104.

En mode générateur d'énergie, les transistors 220 de l'onduleur 204 sont commandés en commutation par le contrôleur 206 ; l'onduleur 204 est ainsi apte à convertir un courant triphasé provenant de la machine tournante 104 en courant continu réinjecté sur le réseau d'alimentation 210. Les aubes 142 du diffuseur 140 sont orientées dans une deuxième position, distincte de la première position, qui maximise une énergie électrique fournie par la machine tournante 104, lorsque celle-ci est entraînée par la roue 102, elle-même entraînée par un flux d'air traversant le diffuseur 140.

Les première, deuxième et troisième positions sont déterminées expérimentalement, en fonction du profil aérodynamique des pales et des conditions aérodynamiques en amont de l'appareil de ventilation 10.

Le design aérodynamique de l'ensemble de pales 112 et de l'ensemble d'ailettes 129 est conçu pour que, en mode générateur d'énergie et en l'absence de distributeur 140, le rendement de l'appareil de ventilation 10 soit supérieur à 0,3, de préférence supérieur à 0,35. Le distributeur 140 est conçu pour que, en mode générateur d'énergie et lorsque les aubes 142 sont orientées de façon à maximiser l'énergie électrique générée par le ventilateur 100, le rendement de l'appareil de ventilation 10 soit supérieur à 0,4, de préférence supérieur à 0,45.

Nous allons maintenant décrire le fonctionnement de l'appareil de ventilation 10.

Lorsque l'aéronef est au sol, l'appareil de ventilation 10 fonctionne en mode alimentation moteur.

L'interrupteur général 211 étant fermé, le réseau d'alimentation électrique 210 alimente l'appareil de ventilation 10 en courant continu. Le courant entre par la borne A de l'étage d'entrée 202 et sort par la borne B.

Le courant continu fourni par le réseau d'alimentation électrique 210 est converti en courant triphasé par l'onduleur 204. Ce courant triphasé alimente la machine tournante 104. Sous l'effet de ce champ magnétique, le rotor 120 tourne.

Le contrôleur 206 pilote la vitesse de rotation du rotor 120. Il ajuste le rapport cyclique de la loi de commande 230 qu'il transmet aux interrupteurs 218,219 en fonction de l'écart entre la vitesse réelle de rotation du rotor 120 et la vitesse de consigne.

Le rotor 120 entraîne la roue 102, qui tourne dans un premier sens et génère un débit d'air fonction de sa vitesse de rotation.

Lorsque l'aéronef est en vol, il n'y a plus besoin de convection forcée pour refroidir l'échangeur de chaleur 8. L'appareil de ventilation 10 est le plus souvent en mode moulinet.

L'air pénètre dans le conduit 6 par l'entrée d'air dynamique 12 sous le seul effet de la vitesse de l'aéronef par rapport aux masses d'air. L'air traverse naturellement le conduit d'air 6 et ressort par la sortie d'air 20, en refroidissant au passage l'échangeur de chaleur 8 et en traversant l'appareil de ventilation 10. La roue 102 n'offre qu'une résistance très faible à l'air circulant dans le conduit 6 et tourne aléatoirement, au gré du débit d'air.

Il se peut que l'aéronef ait besoin d'un surplus d'énergie électrique au cours du vol. Dans ce cas, l'appareil de ventilation 10 peut fournir l'appoint d'énergie électrique nécessaire.

En cas de nécessité, un ordre E de réinjection d'énergie électrique dans le réseau parvient à l'unité de contrôle 225. Celle-ci envoie alors une consigne F au contrôleur 206 commandant le basculement de l'appareil de ventilation 10 en mode générateur d'énergie.

Sous l'effet de l'air circulant dans le conduit 6, la roue 102 tourne, dans le même premier sens que lorsque l'appareil fonctionne en mode d'alimentation moteur. La rotation de la roue 102 entraîne la formation de courants alternatifs dans les bobinages de la machine tournante 104.

Ces courants alternatifs entrent dans l'onduleur 204 au niveau des points R, S, T. Les transistors 220 modulent le passage de ce courant afin de générer un courant de tension continu adapté au niveau de tension du réseau 210. L'onduleur 204 fonctionne en redresseur commandé.

Le courant qui sort par la borne C de l'onduleur est alors presque continu. Le filtre passe-bas 212 filtre les harmoniques de haute fréquence. En sortie du filtre 212, le courant a ainsi un niveau d'harmoniques conforme aux exigences du réseau d'alimentation électrique de bord de l'aéronef. En première approximation, ce courant de sortie est continu. Il a une tension comprise entre 500 et 600 volts, de préférence comprise entre 520 et 560 volts.

Ce courant continu est ensuite injecté sur le réseau d'alimentation électrique 210 de l'aéronef par la borne A.

Grâce à l'invention, l'appareil de ventilation a donc une utilité lorsque l'aéronef est en vol. Il sert d'alimentation électrique et peut à tout moment, sur simple réception d'une consigne de basculement en mode générateur d'énergie, fournir de l'énergie électrique au réseau d'alimentation électrique de l'aéronef.

## Revendications

1. Appareil de ventilation (10) pour aéronef comportant :
- un ventilateur (100) comprenant une machine électrique tournante (104) et une roue (102) de mise en mouvement d'un flux d'air, solidaire de la machine tournante (104) pour sa mise en rotation ; et
- un onduleur (204), propre à être relié à un réseau d'alimentation électrique (210), et auquel est reliée la machine tournante (104), l'onduleur étant, dans un mode d'alimentation moteur de l'appareil de ventilation (10), propre à la mise en forme du courant d'alimentation de la machine tournante (104), l'onduleur (204) étant réversible et étant, dans un mode générateur d'énergie de l'appareil de ventilation (10), propre à convertir l'énergie électrique fournie par la machine tournante (104) lorsque celle-ci est entraînée mécaniquement par la roue (102), et à injecter cette énergie électrique convertie dans le réseau d'alimentation électrique (210),
**caractérisé en ce que** l'appareil de ventilation (10) comporte un contrôleur (206) et un distributeur (140) s'étendant transversalement devant la roue (102), le distributeur (140) comportant des aubes (142) s'étendant radialement, le contrôleur (206) étant propre, en mode alimentation moteur, à commander l'orientation des aubes (142) dans une première position, maximisant un débit d'air généré par la roue (102) lorsque celle-ci est entraînée par la machine tournante (104), et, en mode générateur d'énergie, à commander l'orientation des aubes (142) dans une deuxième position, maximisant l'énergie électrique fournie par la machine tournante (104) lorsque celle-ci est entraînée par la roue (102), elle-même entraînée par un flux d'air traversant le distributeur (140), les première et deuxième positions étant distinctes l'une de l'autre.

2. Appareil de ventilation selon la revendication 1, **caractérisé en ce qu'**il comporte un filtre passe-bas (212) intercalé entre l'onduleur (204) et le réseau électrique (210) pour le filtrage du courant issu de l'onduleur (204).

3. Appareil de ventilation selon la revendication 1 ou 2, **caractérisé en ce que** le courant en sortie de l'appareil de ventilation (10) en mode générateur d'énergie est un courant continu de tension comprise entre 500 et 600 volts, de préférence comprise entre 520 et 560 volts.

4. Appareil de ventilation selon l'une des revendications précédentes, **caractérisé en ce que** le sens de rotation de la roue (102) est identique lorsque le courant est consommé par le ventilateur (100) et lorsque le courant est produit par le ventilateur (100).

5. Appareil de ventilation selon l'une des revendications précédentes, **caractérisé en ce que** l'onduleur (204) comporte trois branches montées en parallèle, chaque branche comportant deux interrupteurs (218, 219) montés en série, commandés par le contrôleur (206) et entre lesquels est formé un point (R, S, T) d'alimentation de la machine électrique (104), chaque interrupteur (218, 219) comportant un transistor (220) et une diode (221) montés en antiparallèle.

6. Appareil de ventilation selon la revendication 5, **caractérisé en ce que**, en mode générateur d'énergie, l'ensemble des interrupteurs (218, 219) de l'onduleur (204) forme un pont redresseur commandé par le contrôleur (206).

7. Appareil de ventilation selon les revendications 5 ou 6, **caractérisé en ce que** les transistors (220) sont des transistors bipolaires à grille isolée.

8. Appareil de ventilation selon l'une des revendications précédentes, **caractérisé en ce que** la machine tournante (104) est une machine synchrone.

9. Appareil de ventilation selon la revendication 8, **caractérisé en ce que** le rotor (120) de la machine tournante (104) comporte des aimants permanents (136).

10. Appareil de ventilation selon l'une des revendications précédentes, **caractérisé en ce que** la roue (102) comporte un moyeu (110) de révolution portant un ensemble de pales (112), et **en ce que** la machine tournante (104) comprend un rotor (120) et un stator (122), le stator (122) présentant un carter (124) avec une paroi latérale (128) portant un ensemble d'ailettes (129), le design aérodynamique de l'ensemble de pales (112) et de l'ensemble d'ailettes (129) étant conçu pour que, en mode générateur d'énergie, le rendement de l'appareil de ventilation (10) soit supérieur à 0,3, de préférence supérieur à 0,35.

11. Appareil de ventilation selon l'une quelconque des revendications précédentes, **caractérisé en ce que** le distributeur (140) est conçu pour que, en mode générateur d'énergie et lorsque les aubes (142) sont orientées de façon à maximiser l'énergie électrique générée par le ventilateur (100), le rendement de l'appareil de ventilation (10) soit supérieur à 0,4, de préférence supérieur à 0,45.

## Patentansprüche

1. Lüftungsgerät (10) für Flugzeug, umfassend
eine Lüftung (100), umfassend eine drehende elektrische Maschine (104) und ein Rad (102) zur Bewegung eines Luftflusses, das mit der drehenden Maschine (104) für seine Drehung einstückig ist; und
und einen Wechselrichter (204), der ausgelegt ist, um mit einem elektrischen Versorgungsnetz (210) verbunden zu werden, und mit dem die drehende Maschine (104) verbunden ist, wobei der Wechselrichter, in einem Modus zur Versorgung des Motors des Lüftungsgeräts (10) ausgelegt ist, um den Strom zur Versorgung der drehenden Maschine (104) in Form zu bringen, wobei der Wechselrichter (204) umkehrbar ist, und, in einem Modus zur Erzeugung von Energie des Lüftungsgeräts (10) ausgelegt ist, um die elektrische Energie, geliefert von der drehenden Maschine (104), umzuwandeln, wenn diese mechanisch vom Rad (102) angetrieben wird, und diese umgewandelte elektrische Energie in das elektrische Versorgungsnetz (210) einzuspeisen,
**dadurch gekennzeichnet, dass** das Lüftungsgerät (10) eine Steuerungseinheit (206) und einen quer vor dem Rad (102) erstreckenden Verteiler (140) umfasst,
wobei der Verteiler (140) Schaufeln (142) umfasst, die sich radial erstrecken, wobei die Steuervorrichtung (206) im Modus zur Versorgung des Motors ausgelegt ist, um die Ausrichtung der Schaufeln (142) in eine erste Position zu steuern, die den Luftdurchsatz, der vom Rad (102) erzeugt wird, maximiert, wenn dieses von der drehenden Maschine (104) angetrieben wird, und, im Modus zur Erzeugung von Energie, die Ausrichtung der Schaufeln (142) in eine zweite Richtung zu steuern, die die elektrische Energie maximiert, die von der drehenden Maschine (104) geliefert wird, wenn diese vom Rad (102) angetrieben wird, das selbst von einem Luftfluss angetrieben wird, der den Verteiler (140) durchquert, wobei die erste und die zweite Position voneinander verschieden sind.

2. Lüftungsgerät nach Anspruch 1, **dadurch gekennzeichnet, dass** es einen Tiefpassfilter (212) umfasst, der zwischen dem Wechselrichter (204) und dem elektrischen Netz (210) zur Filterung des Stroms aus dem Wechselrichter (204) eingeschoben ist.

3. Lüftungsgerät nach Anspruch 1 oder 2, **dadurch gekennzeichnet, dass** der Strom am Ausgang des Lüftungsgeräts (10) im Modus zur Erzeugung von Energie ein Gleichstrom mit einer Spannung zwischen 500 und 600 Volt ist, vorzugsweise zwischen 520 und 560 Volt.

4. Lüftungsgerät nach einem der vorhergehenden Ansprüche, **dadurch gekennzeichnet, dass** die Drehrichtung des Rads (102) identisch ist, wenn der Strom vom Lüfter (100) verbraucht wird und wenn der Strom vom Lüfter (100) erzeugt wird.

5. Lüftungsgerät nach einem der vorhergehenden Ansprüche, **dadurch gekennzeichnet, dass** der Wechselrichter (204) drei Zweige umfasst, die parallel montiert sind, wobei jeder Zweig zwei Schalter (218, 219) umfasst, die in Reihe montiert sind, gesteuert von der Steuerungsvorrichtung (206), und zwischen denen ein Punkt (R, S, T) zur Versorgung der elektrischen Maschine (104) gebildet ist, wobei jeder Schalter (218, 219) einen Transistor (220) und eine Diode (221) umfasst, die antiparallel montiert sind.

6. Lüftungsgerät nach Anspruch 5, **dadurch gekennzeichnet, dass** im Modus zur Erzeugung von Energie die Gesamtheit der Schalter (218, 219) des Wechselrichters (204) eine Gleichrichterbrücke bildet, der von der Steuervorrichtung (206) gesteuert ist.

7. Lüftungsgerät nach Anspruch 5 oder 6, **dadurch gekennzeichnet, dass** die Transistoren (220) Bipolartransistoren mit isoliertem Gate sind.

8. Lüftungsgerät nach einem der vorhergehenden Ansprüche, **dadurch gekennzeichnet, dass** die drehende Maschine (104) eine synchrone Maschine ist.

9. Lüftungsgerät nach Anspruch 8, **dadurch gekennzeichnet, dass** der Rotor (120) der drehenden Maschine (104) Permanentmagnete (136) umfasst.

10. Lüftungsgerät nach einem der vorhergehenden Ansprüche, **dadurch gekennzeichnet, dass** das Rad (102) eine Drehnabe (110) umfasst, die eine Gruppe von Blättern (112) trägt, und dadurch, dass die drehende Maschine (104) einen Rotor (120) und einen Stator (122) umfasst, wobei der Stator (122) ein Gehäuse (124) mit einer seitlichen Wand (128) aufweist, die eine Gruppe von Rippen (129) trägt, wobei das aerodynamische Design der Gesamtheit der Blätter (112) und der Gesamtheit der Rippen (129) so entworfen ist, dass im Modus zur Erzeugung von Energie die Leistung des Lüftungsgeräts (10) größer als 0,3, vorzugsweise größer als 0,35 ist.

11. Lüftungsgerät nach einem der vorhergehenden Ansprüche, **dadurch gekennzeichnet, dass** der Verteiler (140) so entworfen ist, dass im Modus zur Erzeugung von Energie und wenn die Schaufeln (142) ausgerichtet sind, um die elektrische Energie, die von der Lüftung (100) erzeugt wird zu maximieren, die Leistung des Lüftungsgeräts (10) größer als 0,4, vorzugsweise größer als 0,45 ist.

## Claims

1. An aircraft ventilation device (10) comprising:
- a fan (100) comprising a rotary electrical machine (104) and a wheel (102) for setting an air flow in motion, integral with the rotary machine (104) for setting in rotation thereof; and
- an inverter (204) suitable for being connected to a power supply network (210), and to which the rotary machine (104) is connected, the inverter being, in one motor supply mode of the ventilation device (10), suitable for forming the supply current of the rotary machine (104), the inverter (204) being reversible and being, in an energy generating mode of the ventilation device (10), suitable for converting the electrical energy supplied by the rotary machine (104) when it is mechanically driven by the wheel (102), and injecting said converted electrical energy into the power supply network (210),
**characterized in that** the ventilation device (10) includes a controller (206) and a distributor (140) extending transversely in front of the wheel (102), the distributor (140) including vanes (142) extending radially, the controller (206) being suitable, in the motor supply mode, for controlling the orientation of the vanes (142) in a first position, maximizing an air flow generated by the wheel (102) when it is driven by the rotary machine (104), and, in the energy generating mode, controlling the orientation of the vanes (142) in a second position, maximizing the electrical energy supplied by the rotary machine (104) when it is driven by the wheel (102), itself being driven by a flow of air passing through the distributor (140), the first and second positions being distinct from one another.

2. The ventilation device according to claim 1, **characterized in that** it includes a low-pass filter (212) inserted between the inverter (204) and the power network (210) for filtering of the current coming from the inverter (204).

3. The ventilation device according to claim 1 or 2, **characterized in that** the current output by the ventilation device (10) in the energy generating mode is a direct current with a voltage between 500 and 600 volts, preferably between 520 and 560 volts.

4. The ventilation device according to one of the preceding claims, **characterized in that** the direction of rotation of the wheel (102) is identical when the current is consumed by the fan (100) and when the current is produced by the fan (100).

5. The ventilation device according to one of the preceding claims, **characterized in that** the inverter (204) includes three branches mounted in parallel, each branch including two serially mounted switches (218, 219), controlled by a controller (206) and between which a feed point (R, S, T) of the electrical machine (104) is formed, each switch (218, 219) including a transistor (220) and a diode (221) mounted in antiparallel.

6. The ventilation device according to claim 5, **characterized in that**, in the energy-generating mode, the set of switches (218, 219) of the inverter (204) forms a bridge rectifier controlled by the controller (206).

7. The ventilation device according to claims 5 or 6, **characterized in that** the transistors (220) are insulated-gate bipolar transistors.

8. The ventilation device according to one of the preceding claims, **characterized in that** the rotary machine (104) is a synchronous machine.

9. The ventilation device according to claim 8, **characterized in that** the rotor (120) of the rotary machine (104) includes permanent magnets (136).

10. The ventilation device according to one of the preceding claims, **characterized in that** the wheel (102) includes a revolving hub (110) supporting a set of blades (112), and **in that** the rotary machine (104) comprises a rotor (120) and a stator (122), the stator (122) having a casing (124) with a lateral wall (128) carrying a set of fins (129), the aerodynamic design of the set of blades (112) and of the set of fins (129) being designed so that, in the energy generating mode, the efficiency of the ventilation device (10) is greater than 0.3, preferably greater than 0.35.

11. The ventilation device according to any one of the preceding claims, **characterized in that** the distributor (140) is designed so that, in the energy generating mode and when the vanes (142) are oriented so as to maximize the electrical energy generated by the fan (100), the efficiency of the ventilation device (10) is greater than 0.4, preferably greater than 0.45.
